# EUROPEAN PATENT APPLICATION

(11) **EP 2 587 305 A1**
(43) Date of publication of application: **01.05.2013**
(21) Application number: 12176219.9
(22) Date of filing: 12.07.2012
(51) Int. Cl.: G02F 1/13357

(54) **Backlight unit and display apparatus having the same**

(30) Priority: 27.10.2011 KR 20110110361
(71) Applicant: Samsung Electronics Co., Ltd., Suwon-si, Gyeonggi-do, 443-742 (KR)
(72) Inventor: Baek, Do-hyeon, Gyeonggi-do (KR); Jung, Myung-ryul, Gyeonggi-do (KR); Lee, Kil-hong, Gyeonggi-do (MD); Lee, Dae-hee, Gyeonggi-do (KR); Hyung, Sin-wook, Busan (KR)
(74) Representative: Walaski, Jan Filip

(57) **Abstract**

A backlight unit and a display apparatus are provided. The backlight unit including light emitting elements (110) disposed in parallel with each other along a rear side of a display panel (30); and light guide blocks (200). Each of the light blocks (200) has a shape of a conical hat and respectively corresponds to one of the light emitting elements (110). Each of the light guide blocks (200) also includes an accommodation part (220) accommodating the light emitting element (110) such that light radiated from the light emitting element (110) is incident to the light guide block; a slope part (240) extending at an angle from an edge of the bottom side of the guide block toward the display panel (30) and refracting light spread in the light guide block (200) to transmit the light to the display panel (30); and a pattern part (250) having a patterned shape so as to reflect light spread in the light guide block (200) toward the slope part (240).

## Description

The invention relates to a backlight unit which generates and provides light to a display panel so that images are displayed on the display panel, and to a display apparatus having the same. More particularly, the invention relates to a backlight unit which is capable of realizing local dimming and has a simple structure and a to display apparatus having the same.

A display apparatus is a device which includes a display panel displaying images to display broadcast signals or various formats of image signals/image data, and is configured as a TV, monitor, or the like. The display panel is configured in various types, such as a liquid crystal display (LCD) panel, a plasma display panel (PDP), or the like, and is employed for various display apparatuses. Here, when an LCD panel that does not generate light by itself is employed as a display panel, a display apparatus includes a backlight unit which generates and provides light to the display panel.

A backlight unit of a display apparatus adopts light emitting diodes (LEDs) having excellent characteristics in view of environmental issues and a response rate, as compared with a cold cathode fluorescent lamp conventionally used, as a light source generating light. A backlight unit may be classified into a direct type and an edge type based on position of a light source relative to a light guide plate in arrangement.

In a direct-type backlight unit, light sources are disposed parallel with a rear side of a light guide plate and each transmit light directly to a front display panel. However, in an edge-type backlight unit, light sources are disposed in a bar shape along an edge of a light guide plate, and light from the light sources enters a lateral side of the light guide plate and is then transmitted to a display panel.

According to the invention, there is provided a backlight unit according to claim 1. Optional features are set out in the dependent claims.

According to an aspect of an exemplary embodiment, there is provided a backlight unit of a display apparatus, the backlight unit including a plurality of light emitting elements which are disposed parallel with each other along a rear side of a display panel; and a plurality of light guide blocks each of which has a shape of a conical hat having a bottom side parallel with the rear side of the display panel and respectively corresponds to one of the light emitting elements, and the light guide block includes an accommodation part formed in one area of the bottom side and accommodating the light emitting element such that light radiated from the light emitting element is incident to the light guide block; a slope part slantly extending at an angle from an edge of the bottom side to the display panel and refracting light spread in the light guide block to transmit the light to the rear side of the display panel; and a pattern part formed on the bottom side and having a patterned shape so as to reflect light spread in the light guide block toward the slope part.

The pattern part may be engraved into the bottom side in a wedge shape.

The accommodation part may be formed in a central area of the bottom side, and the wedge shape of the pattern part may form a plurality of concentric circles centered at the accommodation part.

The bottom side may have a rectangular shape, and the slope part may have a conical shape having an apex toward the display panel.

The light guide block may include a side wall standing upright from the bottom side between the edge of the bottom side and the slope part.

The side wall may include a reflection part which reflects light spread in the light guide block back into the light guide block.

The reflection part may include a reflection sheet attached to the side wall, or a light reflecting paint applied to the side wall.

The slope part may refract light spread in the light guide block such that the refracted light is incident to the rear side of the display panel at a main angle substantially orthogonal to the rear side of the display panel.

An angle of the apex of the light guide block formed toward the display panel by the slope part may be set to about 90 degrees to about 180 degrees.

An area of the bottom side may be set corresponding to a brightness of light radiated from the light emitting element.

The accommodation part may include a reflection part formed in a portion facing the display panel in an area in which light from the light emitting element is incident into the light guide block, and reflecting the radiated light.

The reflection part may include a reflection sheet attached to the portion or a light reflecting paint applied to the portion.

The accommodation part may include a scattering part formed in a portion facing the display panel in an area in which light from the light emitting element is incident into the light guide block, and scattering the radiated light.

The scattering part may include a scattering sheet attached to the portion, or a light scattering paint applied to the portion.

The backlight unit may further include a diffusion sheet interposed between the display panel and the light guide blocks, and diffusing light exiting from the slope part and providing to the display panel.

According to an aspect of another exemplary embodiment, there is provided a display apparatus including a display panel; and the above described backlight unit.

The above and/or other aspects will become apparent and more readily appreciated from the following description of the exemplary embodiments, taken in conjunction with the accompanying drawings, in which:
FIG. 1 is an exploded perspective view of a display apparatus according to a first exemplary embodiment;
FIG. 2 is a plan view illustrating a main part of a light source module and a light guide block arranged in the display apparatus of FIG. 1;
FIG. 3 is a perspective view of one light guide block of the display apparatus of FIG. 1;
FIG. 4 is a plan view of a bottom side of the light guide block of FIG. 3;
FIG. 5 is a lateral cross-sectional view of the light guide block of FIG. 3;
FIG. 6 is a lateral cross-sectional view illustrating a main part of the assembled display apparatus of FIG. 1;
FIG. 7 is a plan view illustrating a main part of a light source module and a light guide block arranged in a display apparatus according to a second exemplary embodiment; and
FIG. 8 is a block diagram illustrating a configuration of a display apparatus according to a third exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

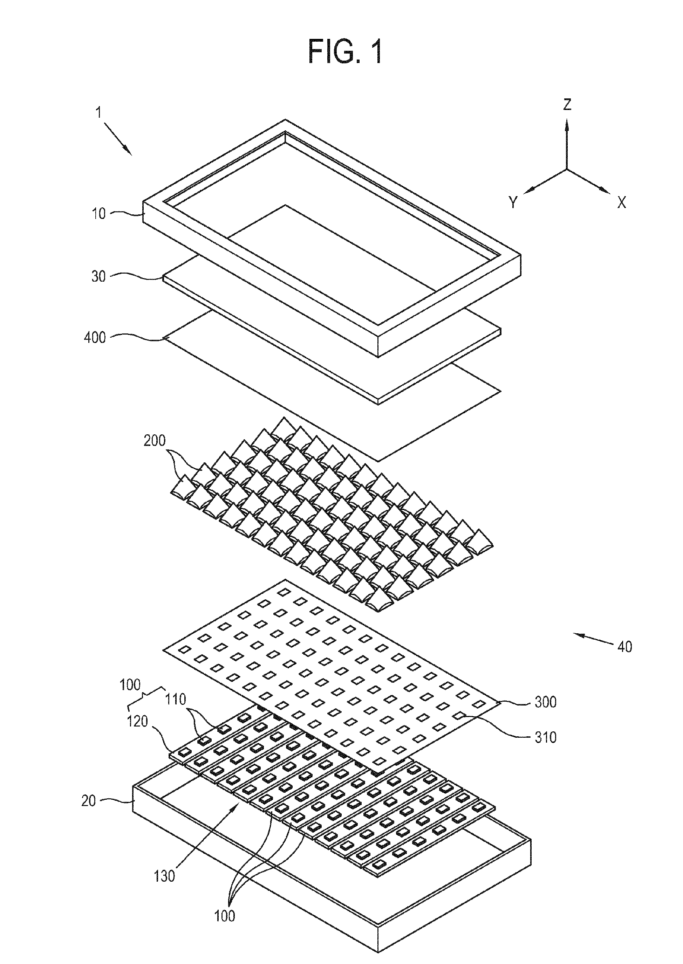

FIG. 1 is a schematic exploded perspective view of a display apparatus according to a first exemplary embodiment.

As shown in FIG. 1, the display apparatus 1 includes covers 10 and 20 forming an inside accommodation space, a display panel 30 accommodated in the accommodation space by the covers 10 and 20 and displaying images on a surface, and a backlight unit 40 accommodated in the accommodation space by the covers 10 and 20 and generating and providing light to the display panel 30 so that images are displayed on the display panel 30.

First, directions shown in FIG. 1 are defined as follows. Basically, X, Y, and Z directions of FIG. 1 indicate width, length, and height directions, respectively. The display panel 30 is disposed on an X-Y plane, and the covers 10 and 20, the display panel 30 and the backlight unit 40 are stacked in a Z-axis. Hereinafter, the drawings including FIG. 1 and exemplary embodiments will be described on the basis of the foregoing definition of the directions. Here, opposite X, Y, and Z directions are expressed as -X, -Y, and -Z directions, respectively, and the X-Y plane denotes a plane defined by an X-axis and a Y-axis.

The covers 10 and 20 form an outward shape of the display apparatus 1 and support the display panel 30 and the backlight unit 40 which are accommodated inside. Defining the Z direction as a front direction/front side and the -Z direction as a rear direction/rear side based on the display panel 30 in FIG. 1, the covers 10 and 20 include a front cover 10 supporting a front side of the display panel 30 and a rear cover 20 supporting a rear side of the backlight unit 40.

The front cover 10 and the rear cover 20 form the accommodation space together and support edges of the display panel 30 and the backlight unit 40. In particular, the front cover 10 has an opening formed on a surface parallel with the X-Y plane to expose an image display area of the display panel 30 therethrough.

The display panel 30 is configured as a liquid crystal display (LCD) panel in the present exemplary embodiment. The display panel 30 is formed of two substrates (not shown) and a liquid crystal layer (not shown) interposed therebetween and displays images on a surface thereof by adjusting alignment of liquid crystals in the liquid crystal layer (not shown) through application of driving signals. The display panel 30 does not emit light by itself and thus is provided with light from the backlight unit 40 to display images in the image display area.

The display panel 30 includes a driving circuit board (not shown). When a driving signal is applied from the driving circuit board, the liquid crystals (not shown) of the display panel 30 rotate at a predetermined angle. Accordingly, light transmitting characteristics vary in the respective cells (not shown) constituting the image display area of the display panel 30, thereby displaying images in the image display area.

The backlight unit 40 is disposed at a rear of the display panel 30, that is, in the -Z direction of the display panel 30, to provide light to the display panel 30. The backlight unit 40 includes a light source unit 130 having a plurality of light emitting elements 110 disposed parallel along a rear side of the display panel 30, a plurality of light guide blocks 200 interposed between the light source unit 130 and the display panel 30 and corresponding to the respective light emitting elements 110 in a one-to-one relationship, a reflection plate 300 disposed under the light guide blocks 200, and a diffusion sheet 400 disposed between the light guide blocks 200 and the display panel 30.

Although FIG. 1 shows only part of the light guide blocks 200 in order to clarify the present exemplary embodiment, it should be understood that the light guide blocks 200 are provided along the rear side of the display panel 30 corresponding to the respective light emitting elements 110 in the actual display apparatus 1.

The light source unit 130 includes a plurality of light source modules 100 that are disposed parallel with each other in the X direction. The light source modules 100 include a plurality of light emitting elements 110 generating and radiating light, and a module board 120 on which the respective light emitting elements 110 are mounted to turn on/off.

The light emitting elements 110 are spaced away from each other and disposed in a matrix form on a plane parallel with the X-Y plane along the surface of the display panel 30. The light emitting elements 110 are configured as light emitting diodes (LEDs), and provided with driving power and on/off control signals from the module board 120 to turn on/off.

Light emitting elements 110 mounted on a single module board 120 may include a blue LED, a green LED, and a red LED, and blue light, green light and red light emitted from the respective colors of LEDs are mixed into white light having excellent color reproducibility. However, this is an illustrative example only, and the light emitting elements 110 may include white LEDs which themselves generate white light.

The plurality of light emitting elements 110 are mounted on a surface of the module board 120, a side in the Z direction in FIG. 1. The module board 120 includes wiring (not shown) to provide power from system power of the display apparatus 1 to the mounted light emitting elements 110, and the wiring is capable of realizing local dimming in that power is transmitted by each light emitting element 110, thereby selectively controlling turning on/off of the respective light emitting elements 110.

The light guide blocks 200, which are plastic lenses including acrylic materials, uniformize light incident from the light source modules 100 and transmit the light to the display panel 30. A plurality of light guide blocks 200 are provided corresponding to the respective light emitting elements 110 in a one-to-one relationship, and disposed in a matrix form on a plane parallel with the X-Y plane between the light emitting elements 110 and the display panel 30. The light guide blocks 200 will be described in detail.

The reflection plate 300 reflects light exiting from an inside of a light guide block 200 to an outside, thus turning the light back toward the corresponding light guide block 200. To this end, a surface of the reflection plate 300 has total reflection characteristics.

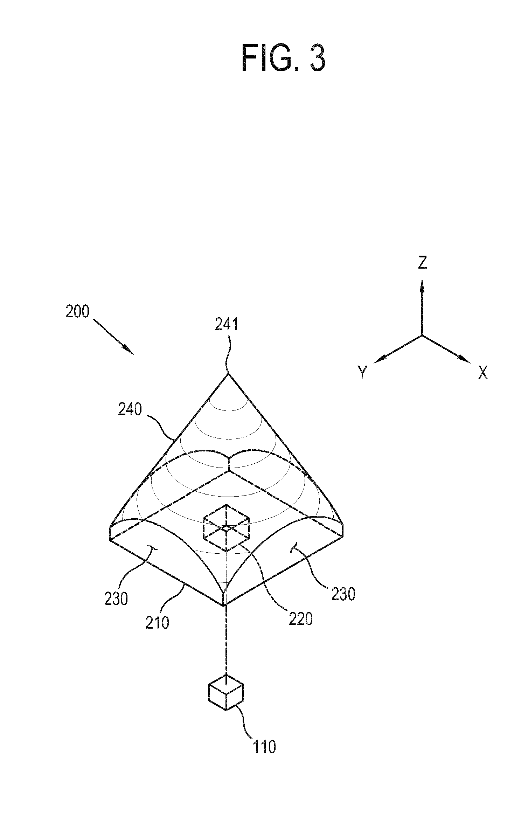

The reflection plate 300 is disposed between the light guide blocks 200 and the module board 120 and includes holes 310 formed on a surface and corresponding to the respective light emitting elements 110 in a one-to-one relationship, to pass light from the light emitting elements 110 therethrough. Due to the holes 310, the light emitting elements 110 may be accommodated in accommodation parts 220 of the light guide blocks 200 while the reflection plate 300 is interposed between the light guide blocks 200 and the module board 120. This accommodation will be described in more detail below with respect to FIG. 3.

The diffusion sheet 400 is disposed between the display panel 30 and the plurality of light guide blocks 200, parallel with the display panel 30. The diffusion sheet 400 scatters and diffuses light exiting from the light guide blocks 200 and transmits uniformized light to the display panel 30.

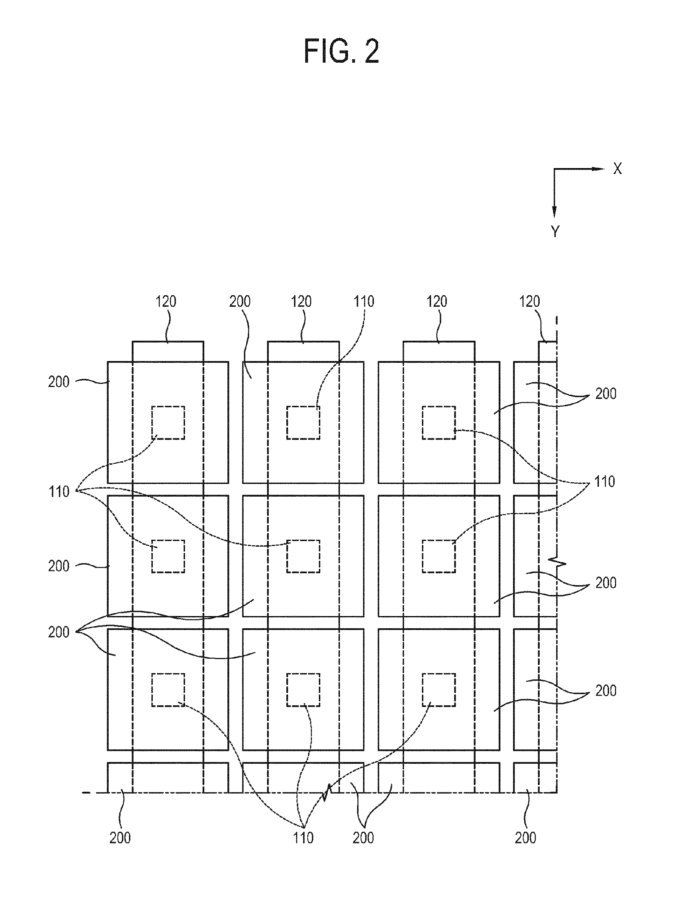

Hereinafter, an example of an arrangement of the light source modules 100 and the light guide blocks 200 is described with reference to FIG. 2. FIG. 2 is a plan view illustrating an arrangement of the light source modules 100 relative to the light guide blocks 200.

As shown in FIG. 2, the plurality of light emitting elements 110 are disposed at intervals along a plane parallel with the X-Y plane, parallel with an image display side of the display panel 30. The plurality of light guide blocks 200 are disposed on the light emitting elements 110 corresponding to the light emitting elements 110.

Viewed in the Z direction, the light guide blocks 200 are provided such that a bottom side thereof facing the light source modules 100 forms a rectangle. The bottom side of the light guide blocks 200 forms a square in the present exemplary embodiment, but may be formed in other shapes.

The bottom side of the light guide blocks 200 forms a square, such as to minimize an area not occupied by the light guide blocks 200 between the light guide blocks 200. If there is an area which is not occupied by the light guide blocks 200 between the light guide blocks 200, spread of light decreases in the area as compared with an area occupied by the light guide blocks 200, and thus brightness may locally deteriorate in an image display area of the display panel 30 corresponding to the area.

The interval between the light emitting elements 110 may change based on manufacturing characteristics of the display apparatus 1 and thus is not numerically limited. However, the interval between the light emitting elements 110 may be determined, in part, based upon on the brightness of each light emitting element 110 and characteristics of realizing local dimming.

For example, when a brightness capability of light radiated from a single light emitting element 110 is high, that is, when a high-brightness light emitting element 110 is employed, the interval between the light emitting elements 110 may be relatively long. A longer interval between the light emitting elements 110 denotes that the single light emitting element 110 and a corresponding light guide block 200 occupy a larger area of the image display area of the display panel 30, which may not be suitable for realizing local dimming.

However, when a brightness capability of light radiated from a single light emitting element 110 is low, that is, when a low-brightness light emitting element 110 is employed, the interval between the light emitting elements 110 may be relatively short, which may be suitable for realizing local dimming, unlike the foregoing case. However, when as internal becomes shorter, a larger number of light emitting elements 110 are used, which may complicate control of corresponding light emitting elements 110 and lead to a relative increase in power consumption.

Application of the light emitting elements 110 to the display apparatus 1 may be determined in consideration of the foregoing aspects. The aforementioned considerations associated with the light emitting elements 110 and relevancy to the light guide blocks 200 will be described in more detail later.

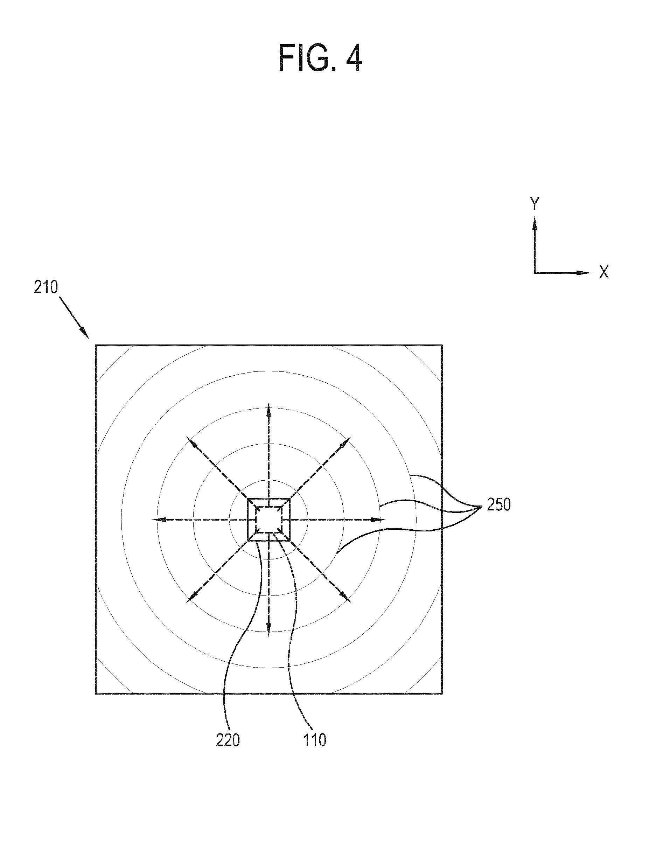

Hereinafter, a configuration of the light guide blocks 200 is described in detail with reference to FIGS. 3 and 4. FIG. 3 is a perspective view of a single light guide block 200, and FIG. 4 is a plan view of a bottom side 210 of the light guide block 200 of FIG. 3, seen in the -Z direction.

As shown in FIG. 3, the light guide block 200 has a shape of a conical hat having the bottom side 210 that is a rectangular side parallel with the X-Y plane. In detail, the light guide block 200 includes the rectangular bottom side 210, an accommodation part 220 formed in one area of the bottom side 210 and accommodating the light emitting elements 110, side walls 230 extending upright from four edges of the bottom side 210 in the Z direction, and a conical-shaped sloped part 240 extending in a slant from the side walls 230 at an angle in the Z direction to converge on an apex 241.

The accommodation part 220 is positioned in a central area of the bottom side 210, that is, in an area of the bottom side 210 on the Z-axis including the apex 241. The accommodation part 220 is provided such that light radiated in all directions from the light emitting elements 110 goes into the light guide block 200. The accommodation part 220 may be formed in various shapes, such as a cube, a cylinder, or the like.

The side walls 230 are formed to have sides parallel with the Z-axis between the bottom side 210 and the slope part 240. The side walls 230 are formed in the four X, -X, Y, and -Y directions of the light guide block 200 based on a shape of the bottom side 210. Since the side walls 230 are formed between the bottom side 210 and the slope part 240, lower edges of the side walls 230 that come in contact with the bottom side 210 form a straight line, and upper edges of the side walls 230 that come in contact with the slope part 240 form a curved line.

The slope part 240 forms an outward shape of the light guide block 200 having a conical shape between the side walls 230 and the apex 241. When cutting the light guide block 200 parallel with a radial direction of the Z-axis, that is, parallel with the X-Y plane, the slope part 240 has a circular cross section. The cross section decreases in area from the side walls 230 toward the apex 241, converging on the apex 241.

The accommodation part 220 is an area to which light radiated from the light emitting elements 110 is incident, and the slope part 240 is an area to which light spread in the light guide block 200 exits. As shown in FIG. 4, the light guide block 200 includes a pattern part 250 formed on the bottom side 210 and having a preset shape of a pattern which reflects light radiated from the light emitting elements 110 toward the slope part 240.

As shown in FIG. 4, the pattern part 250 has Newton's ring shape of a plurality of concentric circles centered at the accommodation part 220 accommodating the light emitting elements 110. The pattern part 250 is engraved into the bottom side 210 in a preset shape, for example, in a wedge or prism shape.

Since light radiated from the light emitting elements 110 is radiated to the light guide block 200 in all directions, the pattern part 250 forms a plurality of concentric circles corresponding to directions of radiated light so as to reflect the light in all directions toward the slope part 240. In a similar principle, the bottom side 210 may have a rectangular shape rather than a square shape.

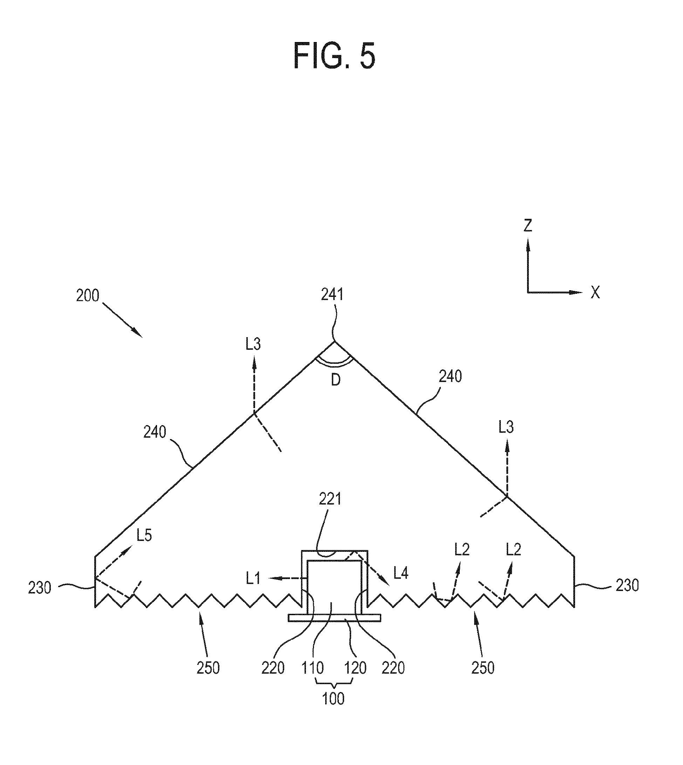

Hereinafter, a structure in which light radiated from the light emitting elements 110 exits from the light guide block 200 is described with reference to FIG. 5. FIG. 5 is a lateral cross-sectional view of the light guide block 200 of FIG. 3, taken along a plane including the apex 241 and being parallel with an X-Z plane. It should be noted that FIG. 5 illustrates a light source module 100 and the light guide block 200 only in order to clarify the present exemplary embodiment.

As shown in FIG. 5, light radiated from a light emitting element 110 is incident to the light guide block 200 through the accommodation part 220 (L1). The radiated light incident to the light guide block 200 is spread in the light guide block 200 and heads toward the pattern part 250, the side walls 230, and the slope part 240.

Light heading toward the pattern part 250 is reflected on one side of the pattern part 250 (L2). Here, since the pattern part 250 has a wedge shape, the one side of the pattern part 250 on which the light is reflected has a flat surface, not a curved surface. Further, the pattern part 250 is provided to totally reflect light spread in the light guide block 200 through various treatments, such as mirror-like surface treatment.

Comparing the pattern part 250 having a curved surface with the pattern part 250 having the flat surface as in the present exemplary embodiment, a main angle of reflected light on the flat surface with respect to the Z-axis is lower than a main angle of reflected light on the curved surface. That is, according to the present exemplary embodiment, a direction of light reflected by the pattern part 250 is relatively close to the Z-axis.

When the direction of light reflected by the pattern part 250 is relatively close to the Z axis, a main angle of light refracted on the slope part 240 to exit is substantially parallel with the Z-axis, that is, substantially vertical to the rear side of the display panel 30 (L3).

The slope part 240 extends in a slant at an angle to the Z-axis and refracts light directly radiated from the light emitting element 110 or reflected by the pattern part 250 to spread into the light guide block 200 substantially parallel with the-Z axis to exit (L3). The angle of the slope part 240 and the wedge shape of the pattern part 250 may be numerically changed based on various environmental characteristics of the display apparatus 1.

An angle D of the apex 241 of the light guide block 200 is set to 90 degrees or greater and less than 180 degrees and is determined to be a specific value based on a light emitting capability of the light emitting elements 110 and local dimming properties, as described above with reference to FIG. 2.

With a greater angle D, the display apparatus 1 is made wider, and the bottom side 210 has a broader area. Accordingly, the light emitting elements 110 may need to radiate high-brightness light. Also, a greater angle D is relatively unfavorable for realizing local dimming.

On the contrary, a narrower angle D is relatively favorable for realizing local dimming and enables application of the light emitting elements 110 radiating low-brightness light. However, a larger number of light emitting elements 110 are used.

Considering these aspects, the angle D may be described variously based on environmental characteristics of the display apparatus 1.

In the above structure, when a main angle of light exiting from the light guide block 200 is substantially vertical to the rear side of the display panel 30, a prism sheet (not shown), which is provided in a related art backlight unit to concentrate light on the display panel, may be omitted, thus reducing manufacturing costs and simplifying the structure.

A portion 221, facing the apex 241, of the accommodation part 220 that is the area in which light radiated from the light emitting element 110 is incident into the light guide block 200, that is, a portion 221 formed in a direction facing the display panel 30, forms a reflection part which reflects the radiated light toward the pattern part 250.

The reflection part is formed by attaching a reflection sheet to the portion 221 or applying a light reflecting paint to the portion 221. If radiated light is incident to the portion 221 in the absence of the reflection part, light exiting from the slope part 240 is concentrated around the apex 241, so that brightness becomes high locally on part of the image display area of the display panel 30 corresponding to the apex 241. Thus, the reflection part is formed in the portion 221, thereby preventing such phenomenon.

Alternatively, a scattering part which scatters light may be formed in the portion 221 instead of the reflection part, thereby reducing concentration of light around the apex 241. The scattering part is formed by attaching a scattering sheet to the portion 221 or applying a light scattering paint to the portion 221.

Instead, the portion 221 may be formed in an uneven shape, such as a round or wedge shape, thus adjusting an angle of radiated light.

The side walls 230 include the reflection part formed of a reflection sheet or light reflecting paint, thus reflecting light spread toward the side walls 20 in the light guide block 200 back into the light guide block 200 (L5). Such structure is used to prevent light spreading in one light guide block 200 from spreading to another adjacent light guide block 200 in a configuration in which side walls 230 of a plurality of light guide blocks 200 face each other.

Accordingly, light interference between the light emitting elements 110 is blocked, thereby realizing local dimming.

The above exemplary embodiment illustrates light from the light emitting elements 110 may be radiated in the Z direction. However, the light emitting elements 110 may radiate light in a direction parallel with a surface of the display panel 30, that is, the X, - X, Y, and -Y directions, but may not radiate light in the Z direction. In this case, a reflection part is not formed in the portion 221.

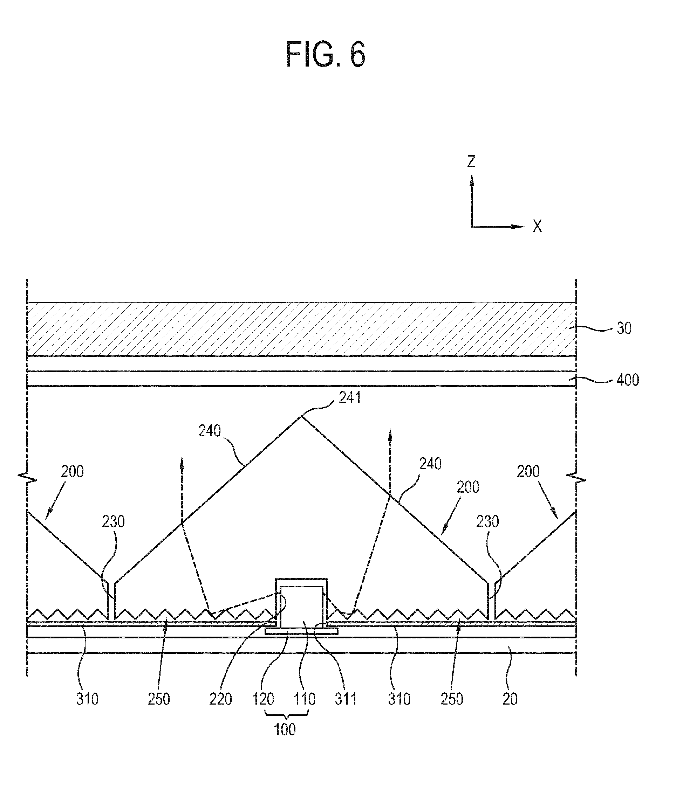

Hereinafter, a structure in which the backlight unit 40 provides light to the display panel 30 in the display apparatus 1 according to the present exemplary embodiment is described with reference to FIG. 6. FIG. 6 is a lateral cross-sectional view illustrating a main part of the assembled display apparatus 1.

As shown in FIG. 6, the backlight unit 40 is disposed at the rear of the display panel 30. The diffusion sheet 400 is interposed between the display panel 30 and the light guide blocks 200.

The reflection plate 310 is interposed between the light guide blocks 200 and the module board 120, and the light emitting element 110 projects in the Z direction through a hole 311 formed in the reflection plate 300.

The plurality of light guide blocks 200 are disposed adjacently to each other such that the side walls 230 face each other. The apex 241 of the light guide blocks 200 faces the display panel 30.

The light emitting element 110 is accommodated in the accommodation part 220 of the light guide blocks 200 through the hole 310. Light radiated from the light emitting element 110 is incident into the light guide blocks 200 through the accommodation part 220. Light spread in the light guide blocks 200 heads toward the pattern part 250, the side walls 230, and the slope part 240. Light reflected by the pattern part 250 heads toward the side walls 230 or the slope part 240.

Light heading toward the side walls 230 is totally reflected back inside the light guide blocks 200 so as not to spread to other adjacent light guide blocks 200. Such light heads back toward the pattern part 250 or the slope part 240.

Part of light transmitted to the slope part 240 is refracted and exits toward the diffusion sheet 400, and the other part thereof is reflected back into the light guide blocks 200 and heads toward the side walls 230 or the pattern part 250. A main angle of light exiting to the diffusion sheet 400 is substantially vertical to the surface of the display panel 30 and may have an allowed error in a numerical range based on environmental characteristics of the display apparatus 1.

The main angle of the light exiting to the diffusion sheet 400 may be determined by various factors including a pattern shape of the pattern part 250 and an angle of the slope part 240 and thus is not limited to a specific value.

Light exiting from the slope part 240 is uniformized and scattered by the diffusion sheet 400 and then provided to the display panel 300. Through this process, the backlight unit 40 may provide light to the display panel 30.

The present exemplary embodiment illustrates a configuration in which only the diffusion sheet 400 is disposed between the display panel 30 and the light guide blocks 200, but is not limited thereto. Various optical sheets (now shown), such as a brightness enhancement sheet (not shown), a protection film (not shown), a prism sheet (not shown), and a diffusion sheet (not shown), may be selectively applied to the backlight unit 40 based on characteristics of light exiting from the light guide blocks 200.

The first exemplary embodiment illustrates the square bottom side 210 of the light guide blocks 200, but is not limited thereto. As described above, the bottom side 210 of the light guide blocks 200 has a square shape in order to minimize an area which is not occupied by the light guide blocks 200. Thus, the bottom side 210 of the light guide blocks 200 may have various shapes as long as the area not occupied by the light guide blocks 200 is minimized.

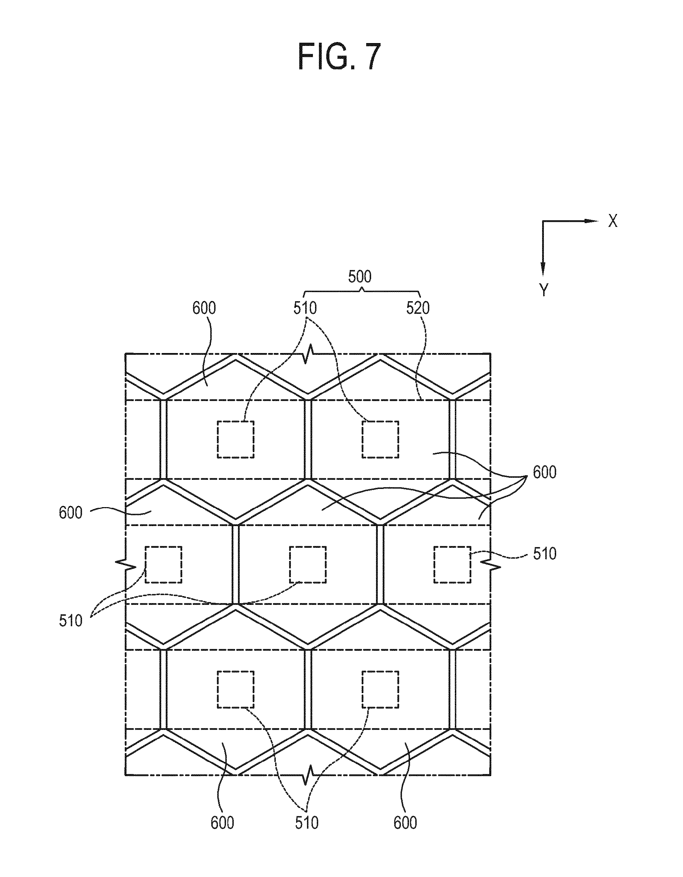

FIG. 7 is a plan view illustrating arrangement of a light source module and a light guide block according to a second exemplary embodiment.

As shown in FIG. 7, the light source module 500 according to the second embodiment includes a plurality of light emitting elements 510 arranged in the X direction and a module board 520 on which the respective light emitting elements 510 are mounted. In FIG. 7, light emitting elements 510 mounted on adjacent module boards 520 are disposed so as to alternate in the X direction. In other words, the light emitting elements 510 are not aligned in the Y direction in FIG. 7.

The light guide block 600 is disposed corresponding to each light emitting element 510. Here, the light guide block 600 has a hexagonal shape such that edges of two adjacent light guide blocks 600 are parallel with each other. Accordingly, although the second exemplary embodiment employs a different configuration from that in the first exemplary embodiment, an area not occupied by the light guide blocks 600 is minimized in a same manner as in the first exemplary embodiment.

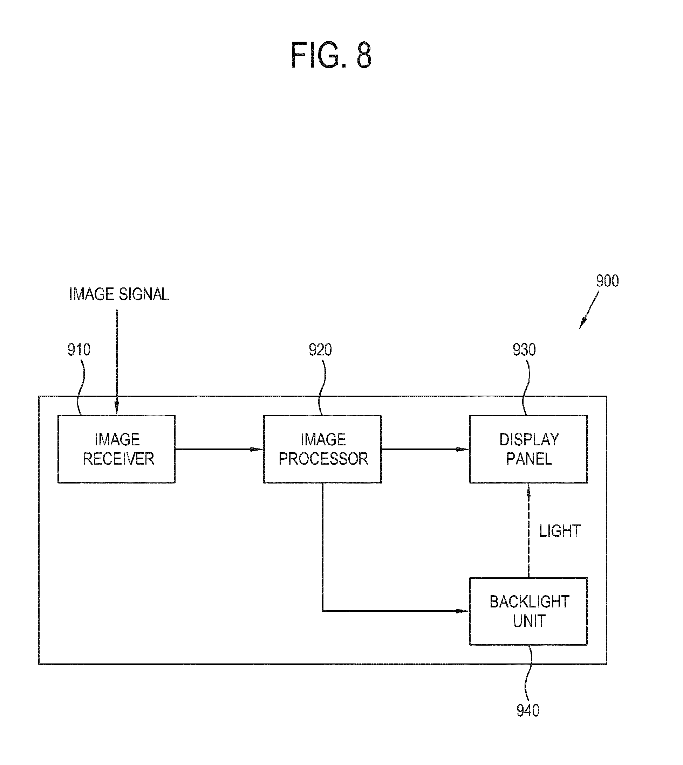

The above described exemplary embodiments may be applied to a display apparatus 900 configured in various types. Hereinafter, when the display apparatus 900 is configured as a TV, an example employing the exemplary embodiments is described with reference to FIG. 8. FIG. 8 is a block diagram illustrating an example configuration of the display apparatus according to a third exemplary embodiment. In FIG. 8, a solid line indicates transmission of an image signal or control signal, and a dotted line indicates transmission of light.

As shown in FIG. 8, the display apparatus 900 includes an image receiver 910 receiving image signals from the outside, an image processor 920 processing image signals received by the image receiver 910, a display panel 930 displaying images based on the image signals processed by the image processor 920, and a backlight unit 940 providing light so that images are displayed on the display panel 930.

The image receiver 910 receives image signals and/or image data through a wire or wirelessly and transmits the image signals and/or image data to the image processor 920. The image receiver 910 may be configured as various types corresponding to standards of received image signals. For example, the image receiver 910 may receive radio frequency (RF) signals or image signals according to composite or component video, super video, SCART, and high definition multimedia interface (HDMI), DisplayPort, unified display interface (UDI), or wireless HD standards.

The image processor 920 performs various image processes on image signals and outputs the processed image signals to the display panel 930, so that images are displayed on an image display side of the display panel 930. The image processor 920 may perform various processes, without being particularly limited, for example, decoding corresponding to various image formats, de-interlacing, frame refresh rate conversion, scaling, noise reduction to improve image quality, detail enhancement, and the like.

The image receiver 910 and the image processor 920 may be configured as image processing boards (not shown) embedded in the display apparatus 900.

The display panel 930 and the backlight unit 940 have substantially the same configurations as those in the foregoing exemplary embodiments, and thus descriptions thereof are omitted.

Although exemplary embodiments have been shown and described, it will be appreciated by those skilled in the art that changes may be made in these exemplary embodiments without departing from the invention, the scope of which is defined in the appended claims.

## Claims

1. A backlight unit for a display apparatus, the backlight unit comprising:
a plurality of light emitting elements; and
a plurality of light guide blocks, each of the light guide blocks having a substantially conical shape having a bottom side parallel with the X-Y plane and respectively corresponding to one of the light emitting elements,
wherein each of the light guide blocks comprises:
an accommodation part formed in one area of the bottom side which accommodates the light emitting element such that light radiated from the light emitting element is incident to the light guide block;
a slope part extending at an angle to the Z-axiswhich refracts light spread in the light guide block to transmit the light in a direction substantially parallel to the Z-axis; and
a pattern part formed on the bottom side which reflects light spread in the light guide block toward the slope part.

2. The backlight unit according to claim 1, wherein the pattern part is engraved into the bottom side in a wedge shape.

3. The backlight unit according to claim 2, wherein the accommodation part is formed in a central area of the bottom side, and the wedge shape of the pattern part forms a plurality of concentric circles centered at the accommodation part.

4. The backlight unit according to any preceding claim, wherein the slope part has a conical shape having an apex.

5. The backlight unit according to claim 4, wherein the angle of the apex formed by the slope part is from about 90 degrees to about 180 degrees.

6. The backlight unit according to claim 4 or 5, wherein the accommodation part includes a reflection part formed in a portion facing the apex in an area in which light from the light emitting element is incident into the light guide block, which reflects the radiated light.

7. The backlight unit according to claim 4 or 5, wherein the accommodation part comprises a scattering part formed in a portion facing the apex in an area in which light from the light emitting element is incident into the light guide block, which scatters the radiated light.

8. The backlight unit according to claim 7, wherein the scattering part comprises a scattering sheet attached to the portion, or a light scattering paint applied to the portion.

9. The backlight unit according to any preceding claim, wherein each of the light guide blocks further comprises a side wall standing upright from the bottom side between the edge of the bottom side and the slope part.

10. The backlight unit according to claim 9, wherein the side wall comprises a reflection part which reflects light spread in the light guide block back into the light guide block.

11. The backlight unit according to claim 10, wherein the reflection part comprises a reflection sheet attached to the side wall, or a light reflecting paint applied to the side wall.

12. The backlight unit according to any preceding claim, wherein an area of the bottom side is set according to a brightness of light radiated from the light emitting element.

13. A display apparatus comprising:
a display panel; and
a backlight unit according to anyone of claims 1 to 12.

14. The display apparatus according to claim 13, wherein the slope part of the backlight unit refracts light spread in the light guide block such that the refracted light is incident to the rear side of the display panel at a main angle substantially orthogonal to the rear side of the display panel.

15. The display apparatus according to claim 13 or 14, further comprising a diffusion sheet interposed between the display panel and the light guide blocks, the diffusion sheet diffusing light exiting from the slope part toward the display panel.
